# DEMANDE DE BREVET EUROPEEN

(11) **EP 4 250 159 A1**
(43) Date de publication de la demande: **27.09.2023**
(21) Numéro de dépôt: 23163239.9
(22) Date de dépôt: 21.03.2023
(51) Int. Cl.: G06F 21/60, G01D 4/00

(54) **PROCÉDÉ DE TRANSMISSION ET DE RÉCEPTION DE DONNÉES COMPTEUR ET DISPOSITIFS METTANT EN OEUVRE LESDITS PROCÉDÉS**

(30) Priorité: 24.03.2022 FR 2202602
(71) Demandeur: Sagemcom Energy & Telecom SAS, 92500 Rueil Malmaison (FR)
(72) Inventeur: TEBOULLE, Henri, 92500 RUEIL MALMAISON (FR); LECAPPON, Jean-Paul, 92500 RUEIL MALMAISON (FR)
(74) Mandataire: Cabinet Le Guen Maillet

(57) **Abrégé**

Un procédé de transmission de données compteur par un compteur à destination d'un dispositif mobile est décrit. Le procédé comprend les étapes suivantes mises en oeuvre par ledit compteur :
- recevoir (S301) une requête de demande de donnée compteur ;
- obtenir (S302) une donnée compteur ;
- générer (S303) une empreinte à partir d'au moins un couple de données comprenant un numéro de série dudit compteur et ladite donnée compteur obtenue ;
- chiffrer (S304) ladite empreinte avec une clé privée connue du seul compteur, ladite empreinte chiffrée étant une signature ; et
- transmettre (S306) à destination du dispositif mobile une trame comprenant ladite donnée de compteur obtenue et ladite signature.

## Description

### DOMAINE TECHNIQUE

Au moins un mode de réalisation concerne un procédé de transmission de données compteur à destination d'un dispositif mobile. Au moins un autre mode de réalisation concerne un procédé de réception des données compteur. Des dispositifs mettant en oeuvre lesdits procédés de transmission et de réception sont également décrits.

### ETAT DE LA TECHNIQUE ANTERIEURE

Il est connu des compteurs intelligents, de type compteurs électriques, compteurs d'énergie thermique ou compteurs à fluides, e.g. gaz ou eau, qui comprennent des interfaces de communication permettant à un système de gestion automatisée d'effectuer une collecte à distance de données compteur, e.g. des données de consommation. Par exemple, ces compteurs intelligents comportent une (ou des) interface(s) de communication de type CPL (acronyme de « Courant Porteur en Ligne ») et/ou de type radio. Ils transmettent alors par ces interfaces de communication les données compteur, e.g. sous la forme de trames, pour une remontée de ces données de consommation, à intervalles réguliers ou non, jusqu'à un système d'information les traitant de manière centralisée. Ces données de consommation sont utilisées par le système d'information notamment pour des opérations de facturation du client consommateur par un fournisseur de service.

Ces compteurs intelligents sont généralement équipés de moyens d'affichage de type écran LCD (« Liquid Crystal Display » en anglais) permettant à un consommateur de visualiser différentes informations comme par exemple une donnée de consommation courante, une température d'eau, etc. Ainsi, en cas de litige avec le fournisseur de service, le consommateur peut, par une lecture directe sur un écran du compteur, vérifier la valeur de la donnée de consommation.

De tels compteurs présentent plusieurs inconvénients. Notamment, ils sont parfois difficilement accessibles pour un consommateur souhaitant lire une information concernant la consommation courante. Par ailleurs, les moyens d'affichage en plus d'être coûteux sont sensibles à l'humidité extérieure et peuvent poser des problèmes d'étanchéité.

Il est souhaitable de pallier ces différents inconvénients de l'état de la technique. Il est notamment souhaitable que le consommateur puisse accéder facilement aux données compteur et ce de manière sécurisée tout en limitant les problèmes d'étanchéité à l'humidité extérieure.

### EXPOSE DE L'INVENTION

Au moins un mode de réalisation concerne un procédé de transmission de données compteur par un compteur à destination d'un dispositif mobile. Le procédé comprend les étapes suivantes mises en oeuvre par ledit compteur :
- recevoir une requête de demande de donnée compteur ;
- obtenir une donnée compteur ;
- générer une empreinte à partir d'au moins un couple de données comprenant un numéro de série dudit compteur et ladite donnée compteur obtenue ;
- chiffrer ladite empreinte avec une clé privée connue du seul compteur, ladite empreinte chiffrée étant une signature ; et
- transmettre à destination du dispositif mobile une trame comprenant ladite donnée de compteur obtenue et ladite signature.

Le procédé décrit permet à un consommateur d'accéder facilement aux données compteur et ce de manière sécurisée. Par ailleurs, ce procédé permet le cas échéant de s'affranchir de moyens d'affichage sur le compteur et ainsi permet de réduire les problèmes d'étanchéité. Selon un mode de réalisation particulier, générer une empreinte comprend appliquer une fonction de hachage audit couple de données.

Selon un mode de réalisation particulier, la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

Selon un mode de réalisation particulier, chiffrer ladite empreinte avec une clé privée connue du seul compteur comprend appliquer un chiffrement asymétrique à courbes elliptiques.

Selon un mode de réalisation particulier, ladite donnée compteur est une donnée d'un compteur d'électricité, d'un compteur de gaz, d'un compteur d'énergie thermique ou d'un compteur d'eau.

Au moins un mode de réalisation concerne un procédé de réception de données compteur par un dispositif mobile stockant une application de relève d'un compteur particulier. Le procédé comprend les étapes suivantes mises en oeuvre par ledit dispositif mobile :
- envoyer, audit compteur particulier, une requête de demande d'une donnée compteur ;
- recevoir une trame comprenant une donnée compteur et une signature ;
- déchiffrer ladite signature avec une clé publique associée au compteur particulier ;
- générer une empreinte à partir d'un couple de données comprenant un numéro de série dudit compteur particulier et ladite donnée compteur reçue ; et
- comparer ladite signature déchiffrée et ladite empreinte générée et en cas d'égalité afficher ladite donnée compteur sur un écran dudit dispositif mobile et sinon afficher un message d'erreur.

Selon un mode de réalisation particulier, générer une empreinte comprend appliquer une fonction de hachage audit couple de données.

Selon un mode de réalisation particulier, la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

Selon un mode de réalisation particulier, ladite donnée compteur est une donnée d'un compteur d'électricité, d'un compteur de gaz, d'un compteur d'énergie thermique ou d'un compteur d'eau.

Un compteur configuré pour transmettre des données compteur à destination d'un dispositif mobile est également décrit. Le compteur comprend :
- des moyens pour recevoir une requête de demande de donnée compteur ;
- des moyens pour obtenir une donnée compteur ;
- des moyens pour générer une empreinte à partir d'au moins un couple de données comprenant un numéro de série dudit compteur et ladite donnée compteur obtenue ;
- des moyens pour chiffrer ladite empreinte avec une clé privée connue du seul compteur, ladite empreinte chiffrée étant une signature ; et
- des moyens pour transmettre à destination du dispositif mobile une trame comprenant ladite donnée de compteur obtenue et ladite signature.

Un dispositif mobile configuré pour recevoir des données compteur est également décrit. Le dispositif mobile stocke une application de relève d'un compteur particulier et comprend :
- des moyens pour envoyer, audit compteur particulier, une requête de demande d'une donnée compteur ;
- des moyens pour recevoir une trame comprenant une donnée compteur et une signature ;
- des moyens pour déchiffrer ladite signature avec une clé publique associée au compteur particulier ;
- des moyens pour générer une empreinte à partir d'un couple de données comprenant un numéro de série dudit compteur particulier et ladite donnée compteur reçue ; et
- des moyens pour comparer ladite signature déchiffrée et ladite empreinte générée et en cas d'égalité afficher ladite donnée compteur sur un écran dudit dispositif mobile et sinon afficher un message d'erreur.

Au moins un mode de réalisation concerne un produit programme d'ordinateur comprenant des instructions pour mettre en oeuvre le procédé de transmission ou le procédé de réception selon l'un quelconque des modes de réalisation décrits précédemment, lorsque ledit programme est exécuté par un processeur.

Au moins un mode de réalisation concerne un support de stockage stockant un programme d'ordinateur comprenant des instructions pour mettre en oeuvre le procédé de transmission ou le procédé de réception selon l'un quelconque des modes de réalisation décrits précédemment lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système de relève de compteurs selon un mode particulier de réalisation ;
[Fig. 2] illustre schématiquement un exemple d'architecture matérielle d'un compteur intelligent selon un mode particulier de réalisation ;
[Fig. 3] illustre schématiquement un exemple d'architecture matérielle d'un dispositif mobile configuré pour la relève locale de données compteur selon un mode particulier de réalisation ;
[Fig. 4] illustre un procédé de transmission d'une donnée compteur à un dispositif mobile selon un mode particulier de réalisation ; et
[Fig. 5] illustre un procédé de réception d'une donnée compteur par un dispositif mobile selon un mode particulier de réalisation.

### EXPOSE DETAILLE DE MODES DE REALISATION

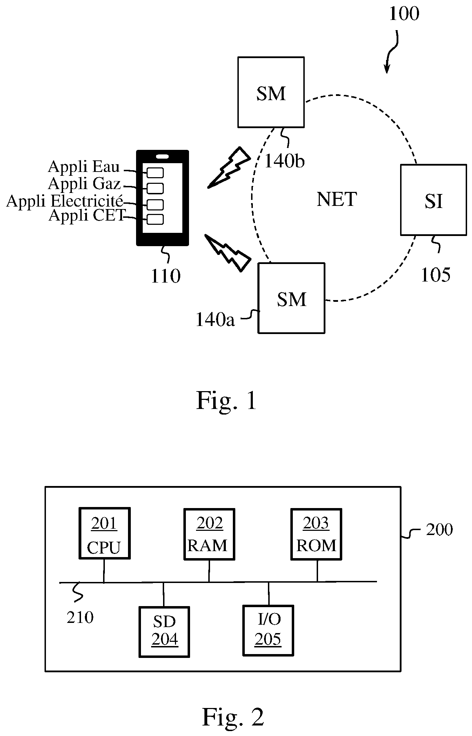

La **Fig. 1** illustre ainsi schématiquement un système de relève de compteurs 100 dans lequel les différents modes de réalisation peuvent être implémentés. Le système de relève de compteurs 100 est configuré pour réaliser une relève de données compteur notamment des données de consommation auprès de compteurs intelligents SM (« Smart Meters » en anglais) 140a et 140b. Les compteurs intelligents SM 140a et 140b sont par exemple des compteurs électriques, des compteurs de gaz, des compteurs d'énergie thermique ou des compteurs d'eau ou de tout autre type fluide, e.g. de l'essence, dont la consommation peut être mesurée grâce à un logiciel de métrologie. Ces compteurs intelligents 140a et 140b ont la capacité de communiquer par transmission radio et/ou CPL avec un système d'information SI (« Information System » en anglais) 105 soit directement soit par l'intermédiaire de concentrateurs de données non représentés sur la Fig. 1. Le rôle du système d'information SI 105 est de surveiller les opérations de mesure effectuées par les compteurs intelligents SM 140a et 140b. Le système d'information SI 105 comprend un système de tête de réseau HES (acronyme de « Head-End System »), un système de gestion des données de compteurs MDMS (acronyme de « Meter Data Management System ») et un système de gestion de clés KMS (acronyme de « Key Management System »).

Les compteurs intelligents 140a et 140b ont en outre la capacité de communiquer par transmission radio NFC (acronyme anglais de « Near Field Communication ») ou Bluetooth, e.g. BLE (acronyme anglais de « Bluetooth Low Energy ») à 2.4 GHz, avec un dispositif mobile 110 tel qu'un téléphone intelligent (« smartphone » en anglais) ou une tablette. Le dispositif mobile 110 est notamment configuré pour relever localement des données compteur et pour afficher sur son écran les données compteur ainsi relevées après avoir vérifié qu'elles proviennent bien du compteur duquel elles sont censées provenir. Les données compteur relevées localement par le dispositif mobile sont par exemple des données de consommation, des valeurs efficaces de tension (Urms) et de courant (Irms) pour les compteurs électriques, une température de l'eau et des données de pression amont et aval pour les compteurs d'eau.

A cet effet, le dispositif mobile 110 comprend en mémoire une application de relève de compteur. Dans un mode de réalisation particulier, le dispositif mobile 110 comprend une application par type de compteur dont l'utilisateur est susceptible de relever les données. Par exemple, comme illustré sur la Fig. 1, le dispositif mobile 110 comprend 4 applications : une application notée « Appli Electrique » pour la relève du compteur électrique, une application notée « Appli Eau » pour la relève du compteur d'eau, une application notée « Appli Gaz » pour la relève du compteur de gaz et une application notée « Appli CET » pour la relève du compteur d'énergie thermique ou de chaleur. Chaque application conserve en mémoire le numéro de série du compteur dont l'utilisateur est susceptible de relever les données compteur ainsi qu'une clé publique associée audit compteur.

Lorsque les échanges de données entre le compteur 140a ou 140b et le dispositif mobile 110 se font par transmission radio NFC, le dispositif mobile 110 doit être positionné à 10 cm au plus du compteur avec lequel il souhaite communiquer. Le compteur électrique étant tout le temps alimenté, sa fonction NFC est activée en permanence. En revanche, la fonction NFC des compteurs Eau, Gaz et CET qui sont alimentés par piles ou batteries est en temps normal désactivée. Dès lors, une fois l'application dédiée lancée, le dispositif mobile 110 cherche à établir un lien en NFC avec un compteur particulier. L'interface NFC du compteur particulier détecte alors une activité sur son interface radio et provoque le réveil du compteur et donc de sa fonction NFC dans le cas d'un compteur Eau, Gaz ou CET.

Lorsque les échanges de données entre le compteur 140a ou 140b et le dispositif mobile 110 se font par transmission radio Bluetooth, les compteurs alimentés par piles ou batteries, i.e. les compteurs Eau, Gaz et CET, sont réveillés au moment où l'utilisateur souhaite relever des données. A cet effet, un appui long (par exemple un appui pendant une durée supérieure à 2s) sur un bouton situé en face avant du compteur permet de le réveiller. A noter que le compteur électrique ne comporte pas un tel bouton car il est alimenté sur secteur. Sa fonction Bluetooth est donc activée en permanence.

Ainsi, l'appairage entre le compteur 140a ou 140b et le dispositif mobile 110 se fait par un appui long sur le bouton du compteur (dans le cas d'un compteur Eau, Gaz ou de Chaleur) qui active alors le Bluetooth sur ledit compteur, et d'autre part par une confirmation de l'appairage avec le compteur qui est identifié par un nom (intégrant son numéro de série typiquement) sur un menu dédié affiché sur un écran du dispositif mobile 110.

Dans le cas du compteur électrique, le Bluetooth étant toujours activé, le processus d'appairage peut être fait unilatéralement sur le dispositif mobile 110 par une confirmation de l'appairage avec le compteur électrique qui est identifié par un nom (intégrant son numéro de série typiquement) sur un menu dédié affiché sur un écran du dispositif mobile 110.

La **Fig. 2** illustre schématiquement un exemple d'architecture matérielle d'un compteur intelligent 200 selon un mode particulier de réalisation.

Le compteur intelligent 200 comprend, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface d'entrée-sortie I/O 205, notamment une interface de communication avec le réseau de communication NET et au moins une interface radio Bluetooth et/ou NFC. Le compteur intelligent 200 peut comprendre un bouton en face avant, lequel est utilisé par exemple pour l'appairage dudit compteur 200 avec un dispositif mobile.

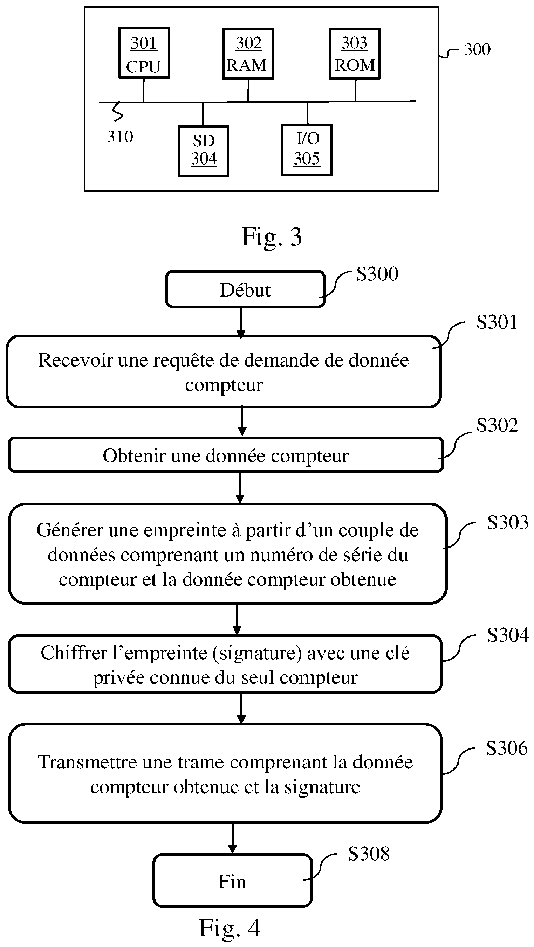

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le compteur intelligent 200 est mis sous tension, le processeur 201 est capable de lire de la RAM 202 des instructions et de les exécuter. Ces instructions forment un programme d'ordinateur causant la mise en oeuvre, par le processeur 201, des étapes et procédés décrits ci-après en lien avec la Fig. 4.

Tout ou partie des étapes et procédés décrits ci-après en lien avec la Fig. 4 peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le compteur intelligent 200 comprend de la circuiterie électronique agencée et configurée pour implémenter les étapes et procédés ci-après en lien avec la Fig. 4.

La **Fig. 3** illustre schématiquement un exemple d'architecture matérielle d'un dispositif mobile 300 configuré pour la relève locale de données compteur selon un mode particulier de réalisation.

Le dispositif mobile 300 comprend, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface d'entrée-sortie I/O 305 qui comprend notamment une interface de communication avec le réseau NET et au moins une interface radio Bluetooth et/ou NFC.

Le dispositif mobile 300 comprend en outre un écran sur lequel des données compteur peuvent être affichées.

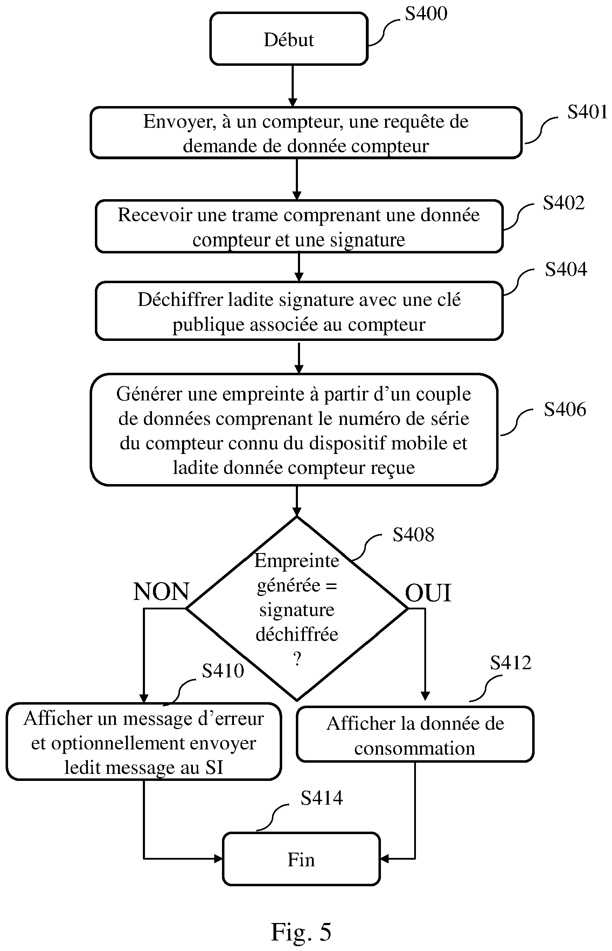

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le dispositif mobile 300 est mis sous tension, le processeur 301 est capable de lire de la RAM 302 des instructions et de les exécuter. Ces instructions forment un programme d'ordinateur causant la mise en oeuvre, par le processeur 301, des étapes et procédés décrits ci-après en lien avec la Fig. 5.

Tout ou partie des étapes et procédés décrits ci-après en lien avec la Fig. 5 peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le dispositif mobile 300 comprend de la circuiterie électronique agencée et configurée pour implémenter les étapes et procédés décrits ci-après en lien avec la Fig. 5.

La **Fig. 4** illustre un procédé de transmission d'une donnée compteur par un compteur selon un mode particulier de réalisation. La donnée compteur est par exemple un index métrologique représentatif d'une donnée de consommation d'un compteur électrique, d'eau, de gaz ou d'énergie thermique ou encore une température d'eau, une valeur de pression d'eau, etc.

Le procédé démarre lors d'une étape S300.

Lors d'une étape S301, le compteur reçoit une requête de demande de données compteur en provenance du dispositif mobile 110.

Lors d'une étape S302, le compteur obtient une donnée compteur, e.g. un index métrologique via un logiciel certifié de métrologie.

Lors d'une étape S303, le logiciel certifié du compteur génère une empreinte notée HASH à partir d'un couple de données comprenant le numéro de série du compteur et la donnée compteur obtenue. A cet effet, une fonction de hachage est utilisée, e.g. une fonction de la famille SHA-2. On nomme fonction de hachage H(.), de l'anglais « hash function » une fonction particulière qui, à partir d'une donnée fournie en entrée, calcule une empreinte numérique servant à identifier rapidement la donnée initiale. Autrement dit à un couple donné correspond une empreinte unique, i.e. le résultat de la fonction de hachage. Dès lors, pour deux couples différents T1 et T2, le compteur génère deux empreintes S1=H(T1) et S2=H(T2) où S1 et S2 sont différentes.

Dans un mode de réalisation, la fonction H(.) est une fonction de la famille SHA-2, e.g. SHA-224, SHA-256, SHA-384 ou SHA-512. Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées, e.g. une fonction SHA-3, une fonction MD4, une fonction MD5, une fonction SHA-1, toutes bien connues dans le domaine de la cryptographie ; ces exemples n'étant bien évidemment pas limitatifs.

Dans une variante de réalisation, une étape optionnelle de bourrage (« padding » en anglais) est appliquée sur le couple de données afin d'obtenir un nombre entier d'octets avant d'appliquer la fonction de hachage H(.).

Lors d'une étape S304, le logiciel certifié du compteur chiffre l'empreinte générée avec une clé privée connue du seul compteur. L'empreinte chiffrée est une signature et est notée HASH'. Cette clé privée a été préalablement générée par le compteur à partir de son numéro de série. Dans un mode particulier de réalisation, la clé privée est générée en appliquant un opérateur « OU exclusif » entre une valeur aléatoire de N bits propre au compteur et H(numéro de série), e.g. N=256 et H() est la fonction SHA-256 pour obtenir une clé privée de 256 bits. A cette clé privée, est associée une clé publique connue notamment du SI. Le chiffrement est un chiffrement asymétrique, e.g. à courbes elliptiques ou RSA. Le chiffrement asymétrique est une technique qui utilise deux clefs de chiffrement : une clé publique et une clé privée. La clé publique est partagée sans restriction alors que la clé privée n'est connue que du seul compteur l'ayant générée. La clé publique associée à la clé privée d'un compteur est notamment connue du dispositif mobile 110. Ainsi, le compteur utilise sa clé privée pour chiffrer l'empreinte HASH afin d'obtenir une signature HASH' que le destinataire, en l'occurrence le dispositif mobile 110, peut déchiffrer avec la clé publique du compteur.

L'utilisation d'un chiffrement à courbes elliptiques permet avantageusement de limiter la taille de la signature HASH'. En effet, un chiffrement asymétrique de type RSA utilise des clés de chiffrement d'une plus grande taille, e.g. de 2048 à 8192 bits, qu'un chiffrement asymétrique à courbes elliptiques qui utilise des clés de chiffrement typiquement de taille 256 à 384 bits. La taille de HASH' dépend d'une part de la taille de HASH et d'autre part de la taille de la clé privée du compteur. Ainsi, quand l'empreinte HASH et la clé privée du compteur sont chacune sur 256 bits, la taille de la signature *HASH'* est de 512 bits. Quand HASH et la clé privée du compteur sont chacune sur 384 bits, la taille de *HASH'* est de 768 bits.

Lors d'une étape S306, le compteur transmet une trame T comprenant dans ses données utiles (« payload » en anglais) la signature HASH' et la donnée compteur. La trame est transmise au dispositif mobile 110 selon le protocole de communication sélectionné NFC ou Bluetooth.

Le procédé se termine à une étape S308.

Ce procédé est particulièrement avantageux dans la mesure où la donnée compteur est transmise au dispositif mobile 110 pour lecture sur un écran dudit dispositif mobile et permet donc de s'affranchir des écrans sur les compteurs. Par ailleurs, ce procédé permet d'accéder facilement à des données compteur même dans le cas où le compteur est difficilement accessible.

La **Fig. 5** illustre un procédé de réception d'une donnée compteur en provenance d'un compteur par un dispositif mobile 110 sur lequel est stockée une application de relève d'un compteur particulier, e.g. Appli eau de la Fig. 1 pour la relève d'un compteur d'eau, selon un mode particulier de réalisation. Le procédé est mis en oeuvre dans le dispositif mobile 110.

L'application de relève connait préalablement les informations suivantes qui lui ont été fournies par le SI et/ou localement : un numéro de série du compteur particulier associé à l'application et une clé publique de signature du compteur particulier.

Lorsqu'un opérateur télécharge un nouveau logiciel de métrologie ou une nouvelle version dudit logiciel dans un compteur, les clés privée et publique de signature sont conservées. En variante, lesdites clés privée et publique de signature sont modifiées. Dans ce cas, le dispositif mobile récupère automatiquement auprès de l'opérateur via l'application dédiée, e.g Appli Eau sur la Fig. 1, la nouvelle clé publique. La nouvelle clé publique est signée par le compteur avec sa nouvelle clé privée et l'ensemble est resigné avec l'ancienne clé privée du compteur de manière à certifier que la nouvelle clé publique vient bien du bon compteur, ladite nouvelle clé publique étant transmise quant à elle en clair au KMS. Le KMS peut alors fournir la nouvelle clé publique du compteur à l'application.

Le procédé démarre lors d'une étape S400. On suppose de manière générale que le compteur est réveillé et apte à échanger des données avec le dispositif mobile. On suppose en particulier que le compteur et le dispositif mobile sont appairés si les transmissions ont lieu par communication radio Bluetooth.

Lors d'une étape S401, le dispositif mobile 110 envoie à un compteur une requête de demande de données compteur. Si au bout d'un certain temps t, e.g. t=30 secondes, aucune trame T n'est reçue en provenance du compteur, le dispositif mobile 110 renvoie la requête.

Lors d'une étape S402, le dispositif mobile 110 reçoit une trame T comprenant dans ses données utiles une signature HASH' et une donnée compteur.

Lors d'une étape S404, le dispositif mobile 110 déchiffre ladite signature HASH' avec une clé publique associée au compteur identifié par son numéro de série. En effet, l'application dédiée, e.g. Appli Eau sur la Fig. 1, dispose de la clé publique de signature du compteur associé à l'application dont le dispositif mobile connaît le numéro de série. Cette clé publique est utilisée pour déchiffrer la signature reçue HASH' et ainsi obtenir une empreinte.

Lors d'une étape S406, le dispositif mobile 110 génère une empreinte HASH" à partir du couple de données comprenant le numéro de série du compteur qu'il connaît via l'application dédiée et la donnée utile reçue. Autrement dit, le dispositif mobile 110 effectue la même opération que le compteur à l'étape S303 avec les données, i.e. numéro de série du compteur et donnée compteur reçue, qu'il a à sa disposition. Notamment, le dispositif mobile 110 utilise, à l'étape S406, la même fonction de HASH que celle utilisée à l'étape S303 par le compteur.

Lors d'une étape S408, le dispositif mobile 110 compare l'empreinte HASH" générée à l'étape S406 avec l'empreinte résultat du déchiffrement à l'étape S404 de la signature HASH'. En cas d'égalité le procédé continue à l'étape S412. En effet, en cas d'égalité, le dispositif mobile 110 est certain que la donnée compteur présente dans la charge utile de la trame T provient bien du bon compteur, i.e. du compteur censé avoir envoyé ladite donnée compteur. Il affiche donc ladite donnée compteur sur son écran. Puis, le procédé se termine à une étape S414.

En cas d'inégalité le procédé continue à l'étape S410.

A l'étape S410, le dispositif mobile 110 affiche un message d'erreur et envoie optionnellement le message d'erreur ou un signal d'alarme au système d'information SI pour indiquer que la donnée compteur reçue pose problème parce qu'elle ne provient pas du compteur duquel elle est censée provenir.

Le procédé se termine à une étape S414.

## Revendications

1. Un procédé de transmission de données compteur par un compteur à destination d'un dispositif mobile, comprenant les étapes suivantes mises en oeuvre par ledit compteur :
- recevoir (S301) une requête de demande de donnée compteur ;
- obtenir (S302) une donnée compteur ;
- générer (S303) une empreinte à partir d'au moins un couple de données comprenant un numéro de série dudit compteur et ladite donnée compteur obtenue ;
- chiffrer (S304) ladite empreinte avec une clé privée connue du seul compteur, ladite empreinte chiffrée étant une signature ; et
- transmettre (S306) à destination du dispositif mobile une trame comprenant ladite donnée de compteur obtenue et ladite signature.

2. Le procédé de transmission selon la revendication 1, dans lequel générer une empreinte comprend appliquer une fonction de hachage audit couple de données.

3. Le procédé de transmission selon la revendication 2, dans lequel la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

4. Le procédé de transmission selon l'une des revendications 1 à 3, dans lequel chiffrer ladite empreinte avec une clé privée connue du seul compteur comprend appliquer un chiffrement asymétrique à courbes elliptiques.

5. Le procédé de transmission selon l'une des revendications 1 à 4, dans lequel ladite donnée compteur est une donnée d'un compteur d'électricité, d'un compteur de gaz, d'un compteur d'énergie thermique ou d'un compteur d'eau.

6. Un procédé de réception de données compteur par un dispositif mobile stockant une application de relève d'un compteur particulier, ledit procédé comprenant les étapes suivantes mises en oeuvre par ledit dispositif mobile :
- envoyer (S401), audit compteur particulier, une requête de demande d'une donnée compteur ;
- recevoir (S402) une trame comprenant une donnée compteur et une signature ;
- déchiffrer (S404) ladite signature avec une clé publique associée au compteur particulier ;
- générer (S406) une empreinte à partir d'un couple de données comprenant un numéro de série dudit compteur particulier et ladite donnée compteur reçue ; et
- comparer (S408) ladite signature déchiffrée et ladite empreinte générée et en cas d'égalité afficher ladite donnée compteur sur un écran dudit dispositif mobile et sinon afficher un message d'erreur.

7. Le procédé de réception selon la revendication 6, dans lequel générer une empreinte comprend appliquer une fonction de hachage audit couple de données.

8. Le procédé de réception selon la revendication 7, dans lequel la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

9. Le procédé de réception selon l'une des revendications 6 à 8, dans lequel ladite donnée compteur est une donnée d'un compteur d'électricité, d'un compteur de gaz, d'un compteur d'énergie thermique ou d'un compteur d'eau.

10. Un compteur configuré pour transmettre des données compteur à destination d'un dispositif mobile, ledit compteur comprenant :
- des moyens pour recevoir une requête de demande de donnée compteur ;
- des moyens pour obtenir une donnée compteur ;
- des moyens pour générer une empreinte à partir d'au moins un couple de données comprenant un numéro de série dudit compteur et ladite donnée compteur obtenue ;
- des moyens pour chiffrer ladite empreinte avec une clé privée connue du seul compteur, ladite empreinte chiffrée étant une signature ; et
- des moyens pour transmettre à destination du dispositif mobile une trame comprenant ladite donnée de compteur obtenue et ladite signature.

11. Un dispositif mobile configuré pour recevoir des données compteur, ledit dispositif mobile stockant une application de relève d'un compteur particulier et comprenant :
- des moyens pour envoyer, audit compteur particulier, une requête de demande d'une donnée compteur ;
- des moyens pour recevoir une trame comprenant une donnée compteur et une signature ;
- des moyens pour déchiffrer ladite signature avec une clé publique associée au compteur particulier ;
- des moyens pour générer une empreinte à partir d'un couple de données comprenant un numéro de série dudit compteur particulier et ladite donnée compteur reçue ; et
- des moyens pour comparer ladite signature déchiffrée et ladite empreinte générée et en cas d'égalité afficher ladite donnée compteur sur un écran dudit dispositif mobile et sinon afficher un message d'erreur.

12. Un produit programme d'ordinateur comprenant des instructions pour mettre en oeuvre le procédé de transmission ou le procédé de réception selon l'une quelconque des revendications 1 à 9, lorsque ledit programme est exécuté par un processeur.

13. Un support de stockage stockant un programme d'ordinateur comprenant des instructions pour mettre en oeuvre le procédé de transmission ou le procédé de réception selon l'une quelconque des revendications 1 à 9 lorsque ledit programme est exécuté par un processeur.
